# EUROPEAN PATENT APPLICATION

(11) **EP 1 801 321 A2**
(43) Date of publication of application: **27.06.2007**
(21) Application number: 06126736.5
(22) Date of filing: 20.12.2006
(51) Int. Cl.: E04H 4/14, E04H 4/00, F16B 5/06

(54) **Retaining clip**

(30) Priority: 23.12.2005 GB 0526189
(71) Applicant: Brindle, Christopher Charles, Essex, Colchester CO6 3EG (GB)
(72) Inventor: Brindle, Christopher Charles, Essex, Colchester CO6 3EG (GB)
(74) Representative: Sanderson, James L.C.

(57) **Abstract**

The invention provides a sheet material retaining clip 10 to hold sheet material 25 onto a structure having a panel 20 and a frame member 21 adjacent the panel. The clip has an elongate base portion 12 adapted to be located in a gap 22 between the panel and the frame member to hold the clip in place. A middle portion 14 connects to an end of the base portion and extends at approximately right angles away from the panel, and a spring arm 15 is connected to the outer end of the middle portion and extends at an acute angle therefrom on the opposite side to the base portion. This allows it to bear on the sheet material to hold it against the panel. The invention also provided for the use of such a clip to connect insulating material to the sides of an aboveground pool.

## Description

The present invention relates to a sheet material retaining clip and in particular to a sheet retaining clip for use when insulating above ground swimming pools.

Above ground swimming pools are popular due to their ease of installation and low set up cost compared to fully installed pools. Such above ground pools, whether directly heated or benefiting from solar heating, are subject to heat loss and it is therefore advantageous to provide insulation over the primary area of loss. This primary area of loss is through evaporation from the surface of the water which is tackled by providing an insulating cover over the top of the pool. The next largest loss of heat is through the side walls of the pool and it has been suggested that these should also be insulated. To this time however, with the exception of our co-pending application No GB05 15274.9, no convenient or cost effective mechanisms have been provided for the attachment of insulating material to the sides of such above ground pools, and the present invention aims to address this problem. It is also advantageous in many situations to connect planar material such as decorations to panels.

Therefore, according to the present invention there is provided a sheet material retaining clip to hold sheet material onto a structure having a panel and a frame member adjacent the panel, the clip having an elongate base portion adapted to be located in a gap between the panel and the frame member to hold the clip in place without separate fixing means, a middle portion connected to an end of the base portion and extending at approximately right angles away from the panel, and a spring arm connected to the outer end of the middle portion and extending at an acute angle therefrom on the opposite side to the base portion whereby it bears on the sheet material to hold it against the panel.

The base portion is usually generally planar, but the spring arm may take many suitable shapes or forms. For example the spring arm may comprise an inner portion that is connected to the base portion, which inner portion generally extends away from the panel, and an outer portion that extends from the end of the inner portion back toward the panel. This helps to ensure that there is enough flex in the material to permit the spring arm to clasp sheet material of a wide range of thicknesses. The inner portion preferably extends at approximately 90° to the base portion to which it is attached.

The clip of the present invention may be retained between the frame member and the panel by any suitable mechanism or means, but usually the base portion is shaped and sized to fit snugly in the gap between them. The gap is often small or non-existent in normal use, but a degree of flexibility in the panel and/or frame member will allow the gap to open or widen slightly on insertion of the base portion. Usually insertion is achieved by a simple lateral sliding movement and removal by the reverse sliding movement. It is preferred, especially where the frame member is a hollow three sided section (as is often the case with the frame members of above ground pools), or where some form of widening of the gap occurs directly behind the frame member that an additional retaining mechanism be provided. To achieve this, the base portion may have a tang or other suitable detent that resists removal of the base portion from between the panel and frame member. This may take the form of a tongue cut from the base portion and subsequently bent out of the plane.

The raised frame members are often in the form of elongate bars, positioned on, or very close to the surface of the panel to be insulated. The panels and frame members on which the clip is used may be more closely attached as long as suitable gaps are available to locate the base portion of the clip.

The clip of the present invention can be used to attach planar or sheet-like insulating material to a variety of structures including in particular above ground swimming pools. Such above ground pools comprise an open topped tank with side walls, the side walls being generally flat but usually having raised vertical bars to provide reinforcement to the structure. The present invention may also be used to attach rigid or flexible sheet material to other appropriate structures such as greenhouses or conservatories. With greenhouses and conservatories the glass panels are connected to a support structure which often has raised bars between the panes. The clips may be located behind the raised bars to connect the sheet material.

Preferably, the clips are formed from a strip of metal bent to the correct profile. Moulded plastics material can also be used to form the clips. It is preferred that the base portion and spring arm are formed from a single strip of resilient material. The free end of the spring arm may be curled away from the panel, when located there against, as this aids positioning of the sheet material.

The present invention also provides the use of such a clip to connect sheet-like insulating material to an above ground pool.

As discussed above the clip may also be used for connecting sheet material to structures such as greenhouses and conservatories, but it has been found to be particularly advantageous for connecting insulating material to the sides of above ground pools. The clip may be used to attach a variety of flexible sheet material to structures. The term insulation material as used herein encompasses both material intended to keep heat in but also material to keep heat out. Such heat excluding materials could include shading material that (in particular on greenhouses and conservatories) is used to reduce internal heat build up caused by solar radiation. The sheet material may also panels or sheets whose function is purely decorative.

The clip of the present invention does not damage the structure to which it is attached, and by suitable pressure and manipulation it or the sheet material may be removed from the structure.

In order that it may be better understood, but by way of example only, two embodiments of the present invention will now be described in more details, with reference to the accompanying drawings, in which:
Figure 1 is a perspective view of a clip according to the present invention;
Figure 2 is a side view of the clip against a panel;
Figure 3 is a side view of the clip with the base portion located between the panel and a frame member;
Figure 4 is a similar side view with the clip holding a thin sheet of an insulating material against the panel;
Figure 5 is a similar view to Figure 4 but showing a piece of thicker insulating material;
Figure 6 is a perspective view of the side part of an above ground pool with insulating material held thereon by several clips of the first embodiment; and,
Figure 7 is a view similar to Figure 2 but of a second embodiment of clip.

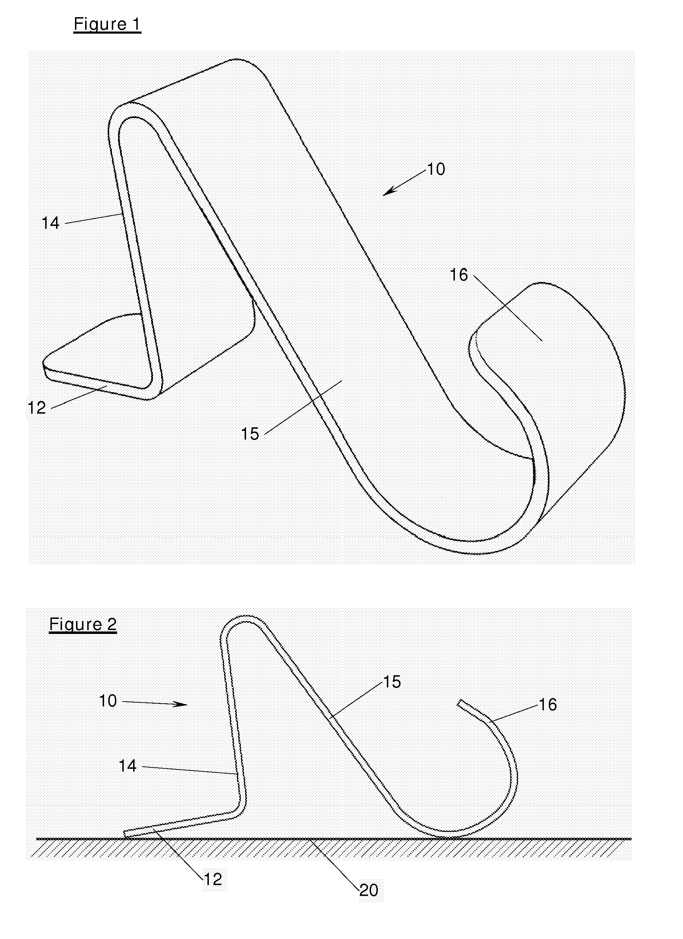

The first embodiment of clip generally indicated 10 is shown in perspective in Figure 1. The clip comprises a base portion 12, a middle portion 14 extending at approximately right angles to the base portion 12, and a spring arm 15. The spring arm 15 has a curved lip 16 formed at its outer end. The clip 10 is formed from a single elongate strip of metal such as spring steel, as this exhibits the necessary resilient deformability. The strip has been bent to achieve the desired configuration and define the base portion, middle portion, spring arm and lip.

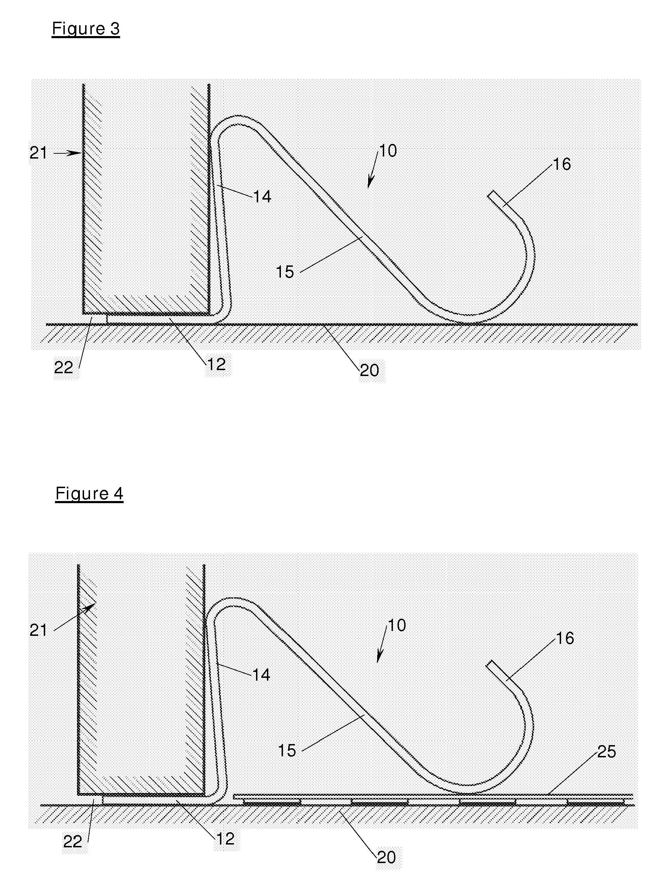

Figure 2 shows a side view of the clip 10 resting against the surface of a panel 20. As can be seen, the lower most part of the spring arm 15 extends below the plane of the base portion 12. This ensures that when the base portion 12 is slid into the gap between the panel 20 and a frame member 21 (as seen in Figures 3-5) the arm is deformed upwards by the panel, even when no insulating material is inserted. This ensures that even a thin layer of insulating material is gripped firmly, and that the clip is held in place between the frame member and panel with or without the presence of the insulating material.

In Figure 3 a cross-section through a frame member 21 located adjacent the panel 20 can be seen. A gap 22 between the frame member 21 and the panel 20 is present. This gap may be formed by slight relative movement of those two parts on insertion of the base portion 12, or it may be formed at the desired width beforehand in construction of the structure. As can be seen, the base portion 12 may be slid laterally between the frame member 21 and the panel 20, moving generally parallel and across the surface of the panel 20. The base member 12 is a resilient fit therein and consequently resists removal of the device except by a reverse lateral force of sufficient strength. The deformation of the spring arm by the panel causes a downward force on the furthermost end of the base portion and an upward force on the inner end tending to enhance the strength of the engagement of the base portion in the gap 22.

In the configuration shown in Figure 3 the spring arm 15 is sufficiently deformed to bear down on the surface 20 and force the upper end of the middle region 14 back against the frame member 21.

As can be seen in Figure 4, insulating material 25 can then be slid between the panel 20 and the lowermost point of the spring arm 15. The clamping force exhibited by the spring down towards the panel 20 holds the sheet of insulated material 25 in place.

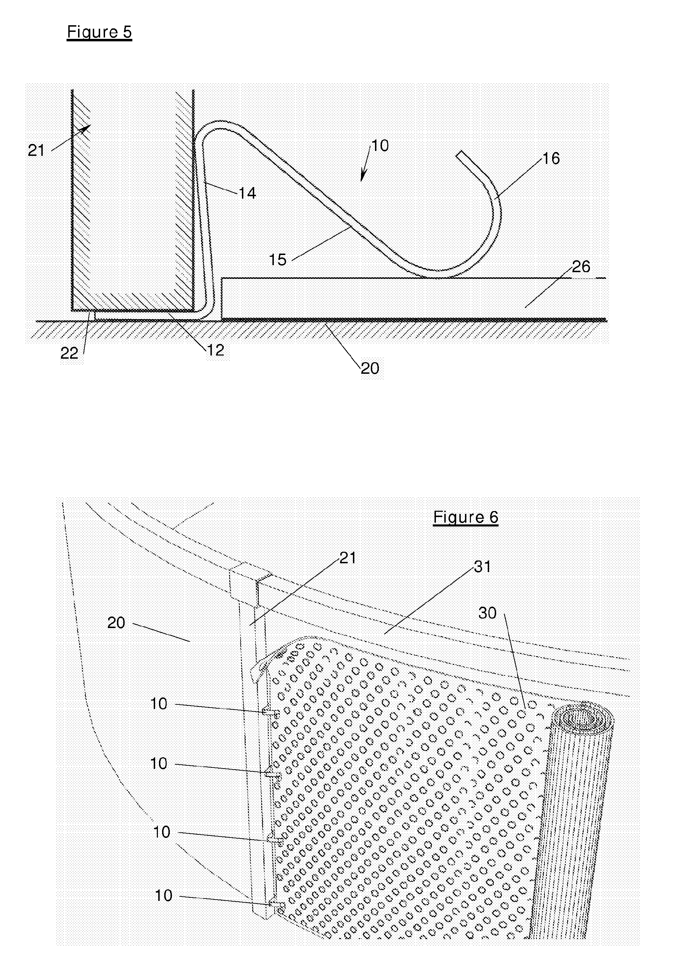

Figure 5 shows a similar view but one in which a thicker sheet of insulating material 26 is shown. The clip is adapted such that the spring arm may accommodate insulating material of a significant range of thicknesses.

Figure 6 shows the side view of an above ground pool to which a sheet of insulating material 30 is being attached using several clips 10. As can be seen, the frame member 21 extends vertically with respect to the panel 20, the panel being the side of the pool itself. A plurality of clips 10 are provided down one edge of the frame member 21 to connect one end of a sheet of insulating material 30 thereto. Whilst not shown, the other end of the insulating material could be similarly connected by further clips to another frame member or the reverse side of the same frame member once the insulating material has passed round the pool. Indeed, as long as a clip could fit between the upper rail 31 and the panel, the upper edge of the insulating material could also be fixed down in a similar way.

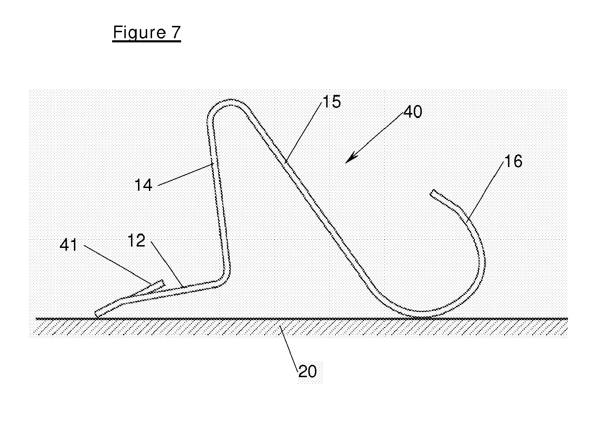

Figure 7 shows a second embodiment of clip which is very similar to the first embodiment, and is generally indicated 40. The only difference between this clip and the first embodiment 10 is that the base portion 20 is provided with an upstanding tang 41. This tang 41 extends upwardly on the face of the base portion opposite to that which lies against the panel. The purpose of this tang 41 is to enhance the security of the location - in particular lateral removal - of the base portion 20 behind a frame member 21 of suitable shape. Many frame members, particularly on above ground swimming pools, comprise three-sided U-shaped elongate metal or plastic sections. These sections outwardly appear solid as the open side is directed against the panel. As the base portion 20 of the second embodiment 40 is located behind such a frame member, the angled leading face of the tang will pass easily under one edge wall of the frame member. The trailing edge of the tang 41 will then abut the inside face of that edge wall to resist removal. The tang 41 may be spring-loaded to deform as it passes under the edge wall.

The present invention may be used in combination with the U-shaped clips forming the subject of our co-pending application No. 05 15274.9, to attach insulating material to an above ground pool or other structure. In particular the present invention can be used in combination with the clips of that application in situations where the U-shaped clips thereof are not effective - for example when the frame members are not of an appropriate shape to accommodate a clip therearound.

## Claims

1. A sheet material retaining clip (10) to hold sheet material (25) onto a structure having a panel (20) and a frame member (21) adjacent the panel, the clip having an elongate base portion (12) adapted to be located in a gap (22) between the panel and the frame member to hold the clip in place without separate fixing means, a middle portion (14) connected to an end of the base portion and extending at approximately right angles away from the panel, and a spring arm (15) connected to the outer end of the middle portion and extending at an acute angle therefrom on the opposite side to the base portion whereby it bears on the sheet material to hold it against the panel.

2. A sheet material retaining clip as claimed in claim 1, in which the base portion has a tang (41) that resists removal of the base portion from between the panel and frame member.

3. A sheet material retaining clip as claimed in any of the preceding claims which is adapted to hold sheet material to an above ground pool, greenhouse or conservatory.

4. A sheet material retaining clip as claimed in any of the preceding claims in which the base portion, middle portion and spring arm are formed from a single strip of resilient material that has be appropriately shaped.

5. A sheet material retaining clip as claimed in any of the preceding claims in which in a free end (16) of the spring arm is curled round to aid positioning of the sheet material.

6. Use of a clip having an elongate base portion adapted to be located in a gap between a panel and a frame member to hold the clip in place, a middle portion connected to an end of the base portion and extending at approximately right angles away from the panel, and a spring arm connected to the outer end of the middle portion and extending at an acute angle therefrom on the opposite side to the base portion whereby it bears on sheet like insulating material to connect it to an above ground pool.
